# EUROPÄISCHE PATENTSCHRIFT

(11) **EP 0 493 313 B1**
(45) Veröffentlichungstag und Bekanntmachung des Hinweises auf die Patenterteilung: **30.03.1994**
(21) Anmeldenummer: 91810898.6
(22) Anmeldetag: 20.11.1991
(51) Int. Cl.: C02F 1/48

(54) **Elektronische Kalkschutzvorrichtung**
Electronic scale prevention device
Dispositif électronique pour la prévention du tartre

(30) Priorität: 26.11.1990 CH 3740/90
(43) Veröffentlichungstag der Anmeldung: 01.07.1992
(73) Patentinhaber: AQUASAL KALKSCHUTZANLAGEN AG, CH-6330 Cham (CH)
(72) Erfinder: Asal, Hans, W-7850 Lörrach (DE); Klöpfer, Michael, CH-4333 Münchwilen (CH)
(74) Vertreter: Eschmann, Heinz

(56) Entgegenhaltungen:
- WO-A-88/05763
- DE-A- 2 846 452
- FR-A- 772 051
- GB-A- 1 560 732
- US-A- 2 532 016

## Beschreibung

Die Erfindung betrifft eine elektronische Kalkschutzvorrichtung zum Einbau in Wasserleitungssysteme, mit wenigstens zwei in einem Abstand gehaltenen Elektroden, zwischen welchen das zu behandelnde Wasser hindurchleitbar ist, und einer Steuerelektronik, die zwischen den Elektroden eine Wechselspannung erzeugt.

Vorrichtungen dieser Art werden zur Behandlung von kalkhaltigem Wasser eingesetzt, um die Bildung von funktionsstörenden Kalkablagerungen in Leitungssystemen, Armaturen, Boilern, Durchlauferhitzern usw. zu verhindern. Dabei wird überdies die Wasserhärte verringert, was insbesondere die Lösungseigenschaften von Wasch- und Spülmitteln im Wasser verbessert.

Die Behandlung des Wassers erfolgt mittels Wechselspannungsimpulsen, die an die Elektroden angelegt werden und im durchfliessenden Wasser Wechselstromimpulse erzeugen. Durch diese Wechselstromimpulse wird der im Wasser gelöste Kalk so beeinflusst, dass er sich nicht mehr als Kalkstein ablagern kann.

Ein Beispiel einer derartigen Kalkschutzvorrichtung ist in der deutschen Gebrauchsmusterschrift DE-GM 85 31 521.4 beschrieben.

Bei dieser bekannten elektronischen Kalkschutzvorrichtung wird die Impulsbreite der Wechselstromimpulse in Abhängigkeit von der Wasserdurchflussmenge gesteuert. Damit kann erreicht werden, dass jeweils genau die zur Behandlung des Wassers benötigte Energie aufgewendet, und sowohl eine ungenügende Unterbehandlung, wie auch eine energieverschwendende Überbehandlung vermieden wird.

Bisher keine Beachtung gefunden hat jedoch das Problem der oft sehr unterschiedlichen Leitfähigkeit des zu behandelnden Wassers infolge verschiedener Zusammensetzung und Härtegrade. Für eine erfolgreiche Wasserbehandlung ist es nämlich ganz entscheidend, dass die Stromstärke des wirkenden Wechselstroms auf einem bestimmten Wert gehalten werden kann. Da bei einem vorgegebenen Wechselspannungsimpuls die damit erzeugte Stromstärke des Wechselstromes direkt von der Leitfähigkeit des Wassers abhängt, bewirkt eine veränderte Leitfähigkeit eine Änderung in der Wechselstromstärke.

Eine wesentliche Aufgabe der Erfindung ist es deshalb, eine elektronische Kalkschutzvorrichtung vorzuschlagen, die in der Lage ist, automatisch einen von der Leitfähigkeit des Wassers unabhängigen Stromstärke-Sollwert zu halten.

Die Lösung dieser Aufgabe ist im kennzeichnenden Teil des unabhängigen Patentanspruchs 1 definiert, bevorzugte Ausführungsbeispiele ergeben sich aus den abhängigen Patentansprüchen.

Weiter ist bekannt, dass für optimale Ergebnisse nicht nur die Stromstärke auf einem bestimmten Wert gehalten werden, sondern auch die Frequenz der Wechselspannung auf die Zusammensetzung des zu behandelnden Wassers abgestimmt werden muss. Geräte nach dem Stand der Technik werden deshalb manuell auf die der Wasserzusammensetzung entsprechende Frequenz eingestellt. Dieses Vorgehen ist umständlich und kann zudem tages- und jahreszeitlichen Änderungen in der Wasserqualität nicht gerecht werden.

Vorzugsweise ist daher gemäss Patentanspruch 2 eine Frequenzwobbelung vorgesehen. Diese bietet den Vorteil, dass eine spezielle Abstimmung der Frequenz entfallen kann, da der Wobbelbereich so wählbar ist, dass die für verschiedene Wasserzusammensetzungen unterschiedlichen optimalen Frequenzen auf jeden Fall innerhalb des Wobbelbereichs liegen.

Im folgenden wird anhand der beiliegenden Zeichnungen ein Ausführungsbeispiel der erfindungsgemässen Kalkschutzvorrichtung erläutert.

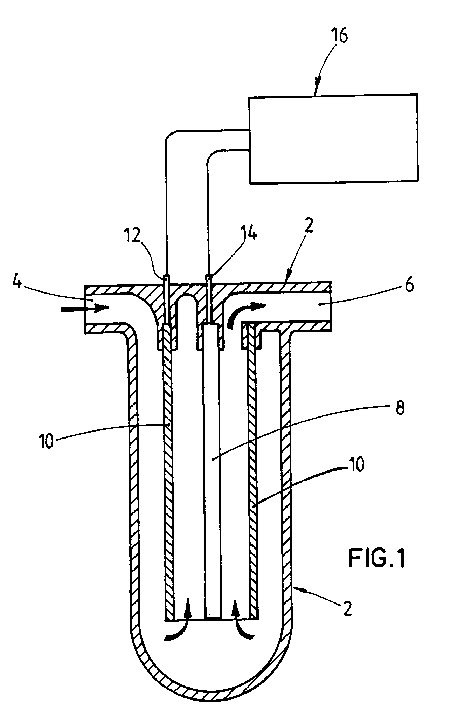

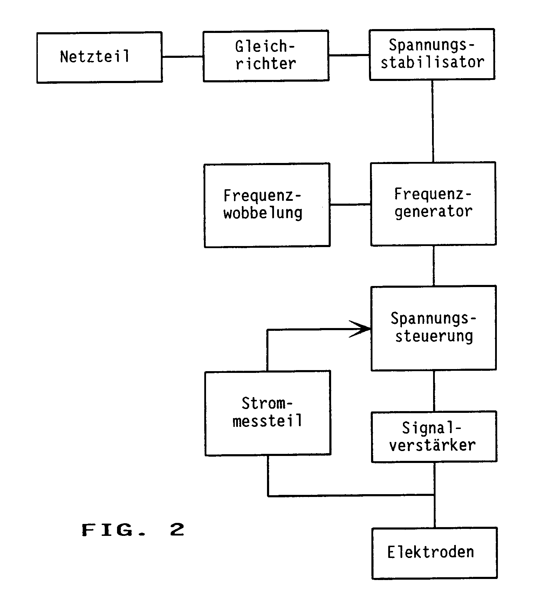

Dabei ist Fig. 1 eine vereinfachte Schnittdarstellung der gesamten Kalkschutzvorrichtung, und Fig. 2 ein Blockschema der Steuerelektronik.

Die schematische Darstellung der Kalkschutzvorrichtung in Fig. 1 zeigt ein Gehäuse 2, beispielsweise aus Kunststoff, mit einem Einlaufstutzen 4 und einem Auslaufstutzen 6. Im Gehäuse 2 sind zwei Elektroden angeordnet, eine als Stab ausgebildete Innenelektrode 8 und eine zu ihr koaxial verlaufende rohrförmige Aussenelektrode 10. Beide Elektroden sind mit Anschlussteilen 12 resp. 14 für den Anschluss an die Steuerelektronik 16 versehen. Die Fliessrichtung der Wassers ist mit Pfeilen angedeutet. Durch den Einlaufstutzen 4 gelangt unbehandeltes Wasser zum unteren Ende der beiden Elektroden, tritt dort in den hohlzylinderförmigen Zwischenraum zwischen Innen- und Aussenelektrode ein und verlässt diesen anschliessend in behandeltem Zustand durch den Auslaufstutzen 6.

Auf eventuell zusätzliche Vorkehrungen zur Abdichtung und elektrischen Isolation soll hier nicht weiter eingegangen werden, da diese im vorliegenden Zusammenhang nicht von Bedeutung sind und vom Fachmann in bekannter Weise ausgeführt werden können.

In Fig. 2 ist das Blockschema der Steuerelektronik zu sehen. Ein Frequenzgenerator zur Erzeugung des Wechselspannungssignals ist von einem Netzteil via einen Gleichrichter und einen Spannungsstabilisator gespiesen. Der Spannungsstabilisator dient der verbesserten Erzeugung eines sauberen Signals mit hoher Flankensteilheit. Das Wechselspannungssignal wird durch eine Spannungssteuerung und einen Signalverstärker an die Elektroden angelegt. Ein mit der Spannungssteuerung gekoppelter Strommessteil misst den über die Elektroden fliessenden Wechselstrom. Gemäss einer bevorzugten Ausführungsform ist der Frequenzgenerator zusätzlich mit einer Frequenzwobbelung versehen.

Die zur Wasserbehandlung eingesetzte Wechselspannung ist bevorzugt ein Rechtecksignal mit Spannungen im Sicherheitskleinspannungsbereich und einer Frequenz zwischen ein und zehn Kilohertz. Um einen unerwünschten elektrolytischen Abbau der Elektroden möglichst zu vermeiden, ist die Form des Rechtecksignals so gewählt, dass dessen Integral aus Spannung und Zeit gleich Null ist. Zum Erreichen einer möglichst grossen Wirkung wird dabei vorteilhaft die Amplitude für den positiven und negativen Impuls verschieden gross gewählt.

Zur Steuerung der wirkenden Stromstärke misst der Strommessteil die Stromstärke in den Elektroden. Die Spannungssteuerung ermittelt die Abweichung dieses gemessenen Istwerts der Stromstärke von einem vorgegebenen Sollwert und steuert die Amplitude der an die Elektroden angelegten Wechselspannung in Abhängigkeit der ermittelten Abweichung auf einen Wert, der den gewünschten Stromstärke-Sollwert erzeugt.

Die bevorzugt miteingebaute Frequenzwobbelung kann die Wechselspannungsfrequenz periodisch über einen bestimmten Frequenzbereich verändern (durchstimmen). Der Wobbelbereich erstreckt sich dabei vorteilhaft von ein bis zehn Kilohertz; je nach Einsatz der Kalkschutzvorrichtung sind jedoch auch andere, oder sogar mehrere verschiedene Wobbelbereiche zweckdienlich.

Die konkrete Ausgestaltung der einzelnen Teile Strommessteil, Spannungssteuerung und Frequenzwobbelung folgt dem Stand der Technik und kann in verschiedener, dem Fachmann bekannter Weise ausgeführt werden.

## Patentansprüche

1. Elektronische Kalkschutzvorrichtung zum Einbau in Wasserleitungssysteme, mit wenigstens zwei in einem Abstand gehaltenen Elektroden (8, 10), zwischen welchen das zu behandelnde Wasser hindurchleitbar ist, und einer Steuerelektronik (16), die zwischen den Elektroden (8, 10) eine Wechselspannung erzeugt, *dadurch gekennzeichnet,* *dass* die Steuerelektronik (16) einen Strommessteil zur Messung der Stromstärke in den Elektroden und eine mit diesem gekoppelte Spannungssteuerung aufweist, derart, dass der Stromfluss in den Elektroden auf einem konstanten Wert haltbar ist durch Steuern der Amplitude der Wechselspannung mittels der Spannungssteuerung.

2. Elektronische Kalkschutzvorrichtung nach Anspruch 1, *dadurch* *gekennzeichnet, dass* die Frequenz der Wechselspannung über einen bestimmten Bereich wobbelbar ist.

3. Elektronische Kalkschutzvorrichtung nach Anspruch 1 oder 2, *dadurch gekennzeichnet, dass* das Integral der in der Elektrode wirkenden Stromstärke über eine periode gleich Null ist.

4. Elektronische Kalkschutzvorrichtung nach einem der Ansprüche 1 bis 3, *dadurch gekennzeichnet, dass* die Amplitude der Wechselspannung für positiven und negativen Impuls verschieden gross ist.

5. Elektronische Kalkschutzvorrichtung nach einem der Ansprüche 1 bis 4, *dadurch gekennzeichnet, dass* die Wechselspannung die Form von Rechteckimpulsen hat.

6. Elektronische Kalkschutzvorrichtung nach einem der Ansprüche 1 bis 5, *dadurch gekennzeichnet, dass* die Frequenz der Wechselspannung im Bereich zwischen 1 kHz und 10 kHz liegt.

7. Elektronische Kalkschutzvorrichtung nach einem der Ansprüche 1 bis 6, *dadurch gekennzeichnet, dass* die Amplitude der Wechselspannung innerhalb des für Sicherheitskleinspannungen zugelassenen Bereiches liegt.

## Claims

1. Electronic antiliming device for installation in water pipe-line systems, having at least two electrodes (8, 10) which are held apart at a distance and between which the water to be treated can be conducted, and a control electronics unit (16), which generates an alternating-current voltage between the electrodes (8, 10), characterized in that the control electronics unit (16) has a current-measuring part for measuring the current intensity in the electrodes and a voltage control, coupled to the said current-measuring part, in such a way that the flow of current in the electrodes can be kept at a constant value by controlling the amplitude of the alternating-current voltage by means of the voltage control.

2. Electronic antiliming device according to Claim 1, characterized in that the frequency of the alternating-current voltage is capable of being swept over a particular range.

3. Electronic antiliming device according to Claim 1 or 2, characterized in that, over a period, the integral of the current intensity acting in the electrode is equal to zero.

4. Electronic antiliming device according to one of Claims 1 to 3, characterized in that the amplitude of the alternating-current voltage is of a different magnitude for a positive pulse and for a negative pulse.

5. Electronic antiliming device according to one of Claims 1 to 4, characterized in that the alternating-current voltage has the form of square-wave pulses.

6. Electronic antiliming device according to one of Claims 1 to 5, characterized in that the frequency of the alternating-current voltage lies in the range between 1 kHz and 10 kHz.

7. Electronic antiliming device according to one of Claims 1 to 6, characterized in that the amplitude of the alternating-current voltage lies within the range permitted for safety extra-low voltages.

## Revendications

1. Dispositif électronique de protection contre le calcaire destiné à être monté dans un système de conduites d'eau, comportant au moins deux électrodes (8,10) maintenues à une certaine distance et entre lesquelles l'eau à traiter peut circuler et un dispositif électronique de commande (16) qui produit une tension alternative entre les électrodes (8,10), caractérisé en ce que le dispositif électronique de commande (16) fournit une partie pour la mesure de l'intensité du courant dans les électrodes et une commande de tension couplée à ce dernier de telle sorte que le flux de courant dans les électrodes peut être maintenu à une valeur constante par commande de l'amplitude de la tension alternative au moyen de la commande de tension.

2. Dispositif électronique de protection contre le calcaire selon la revendication 1, caractérisé en ce que la fréquence de la tension alternative peut être vobulée sur un domaine déterminé.

3. Dispositif électronique de protection contre le calcaire selon la revendication 1 ou 2, caractérisé en ce que l'intégrale de l'intensité agissant dans l'électrode pendant une période est égale à 0.

4. Dispositif électronique de protection contre le calcaire selon l'une des revendications 1 à 3, caractérisé en ce que l'amplitude de la tension alternative est de valeurs différentes pour les impulsions positives et les impulsions négatives.

5. Dispositif électronique de protection contre le calcaire selon l'une des revendications 1 à 4, caractérisé en ce que la tension alternative a la forme d'impulsions rectangulaires.

6. Dispositif électronique de protection contre le calcaire selon l'une des revendications 1 à 5, caractérisé en ce que la fréquence de la tension alternative se trouve dans une gamme comprise entre 1 et 10 kHz.

7. Dispositif électronique de protection contre le calcaire selon l'une des revendications 1 à 6, caractérisé en ce que l'amplitude de la tension alternative se trouve dans la gamme admise pour des faibles tensions de sécurité.
